(19)

Europäisches
Patentamt
European
Patent Office
Office européen
des brevets

(11)     **EP 1 880 136 B1**

(12)                                    **EUROPEAN PATENT SPECIFICATION**

(45) Date of publication and mention
of the grant of the patent:
**08.08.2012   Bulletin 2012/32**

(51) Int Cl.:
***F16N 15/00*** *(2006.01)*     ***B61K 3/00*** *(2006.01)*

(21) Application number: **06741451.6**

(22) Date of filing: **04.05.2006**

(86) International application number:
**PCT/CA2006/000729**

(87) International publication number:
**WO 2006/116877 (09.11.2006 Gazette 2006/45)**

(54) **MODIFIED INTERLOCKING SOLID STICK**

MODIFIZIERTER FESTER VERRIEGELUNGSSTAB

BATON SOLIDE IMBRIQUE MODIFIE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **04.05.2005   US 121462**

(43) Date of publication of application:
**23.01.2008   Bulletin 2008/04**

(73) Proprietor: **Kelsan Technologies Corp.
North Vancouver, British Columbia V7P 1M9 (CA)**

(72) Inventor: **HUI, Ron
Burnaby, British Columbia V5A 4C6 (CA)**

(74) Representative: **Johnson, Lucy Elizabeth
Murgitroyd & Company
Scotland House
165-169 Scotland Street
Glasgow G5 8PL (GB)**

(56) References cited:
**US-A1- 2003 101 897     US-A1- 2004 043 908
US-A1- 2004 179 887     US-A1- 2004 238 282**

**Description**

FIELD OF INVENTION

The present invention relates to a modified interlocking solid composition stick for use with steel surfaces that are in sliding or rolling-sliding contact.

BACKGROUND OF THE INVENTION

The control of friction and wear of metal mechanical components that are in sliding or rolling-sliding contact is of great importance in the design and operation of many machines and mechanical systems. For example, many steel-rail and steel-wheel transportation systems including freight, passenger and mass transit systems suffer from the emission of high noise levels and extensive wear of mechanical components such as wheels, rails and other rail components such as ties. The origin of such noise emission, and the wear of mechanical components may be directly attributed to the frictional forces and behaviour that are generated between the wheel and the rail during operation of the system.

Systems are known for lubricating or otherwise modifying the coefficient of friction between steel surfaces in sliding contact, for example, the flanges of rail car wheels and a track, or fifth-wheels. One type of system uses a liquid lubricant, such as oil or grease, to lubricate the flanges of the rail car wheels. A problem associated with these liquid lubrication systems, however, is the inability to meter the amount of the liquid lubricant applied in a controlled manner. In attempting to overcome the above problems experienced with liquid lubrication systems, solid lubricant or friction modifier compositions in the form of sticks, for example US 6,136,757, have been used to apply compositions to the flanges of rail car wheels or to the interface between the top of the rail and the wheel tread.

Solid stick lubricants or friction modifiers known in the art can be interlocking, wherein the sticks nest one on top of the other. A number of nesting sticks are typically loaded into an applicator (such as a spring-loaded applicator) and bracket assembly attached to the bogie or axle of a rail car for application of the solid stick lubricant or friction modifier. The sticks are generally applied directly to a passenger rail or locomotive wheel by the spring-loaded applicator. As the wheels turn, the solid stick rubs off onto the wheel and leaves a dry thin film. This thin film transfers to the rail face. Use of interlocking solid sticks allows for a seamless transition from one stick to the next and ensures that no part of a stick is wasted. It also minimizes the risk that small residual stubs of material can fall out through the gap between the mouth of the applicator and the wheel.

Known interlocking solid composition sticks generally comprise a rectangular block having a cavity at one end and a nib attached to the other end. The internal wall of the cavity has approximately the same dimensions as the outer surface of the nib, such that a nib of one stick can snugly fit into the cavity of a second stick. Interlocking solid sticks may be used in both transit and freight rail systems where the stick is subjected to high vibration and shock conditions, which can cause failure of the stick. Either or both of the cavity or nib can fail in the field, however failure usually occurs at the cavity end. The nib of the stick applies loads to the cavity end resulting in high stresses at the two corners of the cavity and the top of the stick. This failure results in loss of the composition stick and can reduce the effective life of application of the composition onto the steel surface requiring frequent replacement. The failed stick may also jam the system and cause damage. Solid composition sticks in the art can be arc-shaped and be applied via a circular shaped applicator (Kelsan Technologies, North Vancouver, Canada) or via an arc-shaped applicator (US Patent Publication Number 2004/0179887).

An interlocking solid stick with increased resistance to failure through vibration and shock is required.

**SUMMARY OF THE INVENTION**

The present invention relates to a modified interlocking solid composition stick for applying to a surface, the surface being in sliding or rolling-sliding contact with another surface.

It is an object of the present invention to provide a modified interlocking solid composition stick.

The interlocking solid stick of the present invention comprises a block with four side faces, a first end and an opposed second end, and a nib joined to the first end of the block, the nib having four side faces connected by substantially curved side edges, wherein the second end of the block contains a cavity with substantially curved side walls dimensioned to snugly receive a nib of a corresponding interlocking solid stick and wherein a length (nl) of one side face of the nib and a length ($\ell$) of the side face of the block in the same plane has a ratio nl/1 from about 0.6 to about 0.75. Preferably the ratio nl/1 of the interlocking solid stick is from about 0.67 to about 0.73. Furthermore, the cross-sectional shape of the nib member of the interlocking stick of the present invention is preferably substantially oval.

The interlocking solid stick of the present invention preferably comprises a composition having a low coefficient of friction (LCF) suitable for application to the gauge face of the rail-wheel flange.

The present invention also provides the interlocking solid stick as defined above where the nib member of the interlocking stick of the present invention preferably tapers away from the body member at an angle of taper. The angle of taper is preferably from about 7.0 to about 10.0 degrees.

At least one of the side edges of the body member of the interlocking stick of the present invention is preferably substantially curved. Preferably all of the side edges are substantially curved. Furthermore, at least one of the edges of the first end of the body member is preferably substantially curved. Preferably all of the edges of the first end of the body member are substantially curved.

The nib member of the interlocking solid stick of the present invention is preferably a substantially flattened truncated cone.

Another aspect of the present invention provides an interlocking solid stick comprising a block with four side faces, a first end and an opposed second end, and a nib joined to the first end of the block, the nib having four side faces connected by substantially straight side edges, wherein the second end of the block contains a cavity with substantially straight side walls dimensioned to snugly receive a nib of a corresponding interlocking solid stick and wherein a length (nl) of one side face of the nib and a length ($\ell$) of the side face of the block in the same plane has a ratio nl/l from about 0.75 to about 0.95. Preferably the ratio nl/l of the interlocking solid stick is from about 0.8 to about 0.9; more preferably the ratio nl/l is from about 0.82 to about 0.87. Furthermore, the cross-sectional shape of nib the member of the interlocking stick of this aspect of the present invention is preferably substantially rectangular.

The interlocking solid stick of the second aspect of the present invention preferably comprises a composition having a low coefficient of friction (LCF) suitable for application to the gauge face of the rail-wheel flange.

The present invention also provides the interlocking solid stick of the second aspect of the invention as defined above where the nib member preferably tapers away from the body member at an angle of taper. The angle of taper is preferably from about 7.0 to about 10.0 degrees.

At least one of the side edges of the body member of the interlocking stick of the second aspect of the present invention is preferably substantially curved. Preferably all of the side edges are substantially curved. Furthermore, at least one of the edges of the first end of the body member is preferably substantially curved. Preferably all of the edges of the first end of the body member are substantially curved.

This summary of the invention does not necessarily describe all features of the invention.

## BRIEF DESCRIPTION OF THE DRAWINGS

These and other features of the invention will become more apparent from the following description in which reference is made to the appended drawings wherein:

**FIGURE 1** shows examples of prior art interlocking solid sticks. Figure 1A shows a perspective view of a prior art interlocking solid stick with curved nib side edges and Figure 1B shows a perspective view of a prior art interlocking solid stick with straight nib side edges.

**FIGURE 2** shows an example of the interlocking solid stick of the present invention. **Figure 2A** shows a side view of the stick, Figure 2B shows an end view of the stick and **Figure 2C** shows a top view of the stick.

**FIGURE 3** shows an additional example of the interlocking solid stick of the present invention. Figure 3A shows a perspective view of the stick and Figure 3B shows a side view of the stick.

**FIGURE 4** shows a side view of an additional example of the interlocking solid stick of the present invention.

**FIGURE 5** shows finite element analysis (FEA) output for the prior art interlocking stick shown in Figure 1B. Figure 5A shows FEA output of the cavity and Figure 5B shows FEA output of the nib.

**FIGURE 6** shows finite element analysis (FEA) output for the interlocking stick of the present invention shown in Figure 3. Figure 6A shows FEA output of the cavity and Figure 6B shows FEA output of the nib.

**FIGURE 7** shows a schematic view of a loading assumption of a bending moment applied to an interlocking solid stick. Figure 7A shows the assumed point of highest stress on the nib (point N) when a bending moment is applied to the nib and Figure 7B shows the assumed point of highest stress on the cavity (point C) when a bending moment is applied to the cavity.

**FIGURE 8** shows a schematic view of an alternative loading assumption of forces applied to an interlocking solid stick. Figure 8A shows the assumed point of highest stress on the nib (point N) when forces are applied to the nib and Figure 8B shows the assumed point of highest stress on the cavity (point C) when forces are applied to the cavity.

**FIGURE 9** shows interlocking solid stick models as tested in Example 2 described herein for optimization the design of an interlocking solid composition stick. Figure 9A shows a top view of Model A where the nib and the block have straight side edges and t1 = t2. Figure 9B shows a top view of Model B where the nib and the block have straight side edges and the ratio t1/t2 = l/w. Figure 9C shows a top view of Model C where two opposed side edges of the nib are semi-circular and the ratio of t1/t2 = 1/w.

**FIGURE 10** shows graphs of bending stress factor for the cavity and the nib for the interlocking solid stick models shown in Figure 9. Figure 10A shows the cavity and nib stress factor ($1/mm^3$) for different lengths of t1 (mm) in Model A. Figure 10B shows the cavity and nib stress factor ($1/mm^3$) for different lengths of t1 (mm) in Model B. Figure 10C shows the cavity and nib stress factor ($1/mm^3$) for different lengths of t1 (mm) in Model C.

FIGURE 11 shows a perspective view of an example of an applicator used for application of the interlocking solid stick of the present invention to the gauge face of a rail-wheel flange of a passenger rail or locomotive.

DETAILED DESCRIPTION OF PREFERRED EMBODIMENTS

The present invention relates to a modified interlocking solid composition stick for applying to a surface, the surface being in sliding or rolling-sliding contact with another surface.

The interlocking solid stick of the present invention comprises a body member with four side faces, a first end and an opposed second end, and a nib member joined to the first end of the body member, the nib member having four side faces connected by substantially curved side edges, wherein the second end of the body member contains a cavity with substantially curved side walls dimensioned to snugly receive a nib member of a corresponding interlocking solid stick and wherein a length of one side face of the nib member (nl) and a length of the side face of the body member (1) in the same plane has a ratio nl/l from about 0.6 to about 0.75. Preferably the ratio nl/l of the interlocking solid stick is from about 0.67 to about 0.73. Furthermore, the cross-sectional shape of nib member of the interlocking stick of the present invention is preferably substantially oval.

By the term "substantially curved side edges" and "substantially curved side walls" it is meant that the side edges of the nib member and side walls of the cavity are substantially rounded and do not comprise sharp defined side edges. By side edges it is meant the edges between the four side faces of the nib member, and not other edges, such as an edge between one side and one end of the nib member. Without wishing to be bound by theory, provision of rounded or curved edges for the nib and cavity may reduce stress on the cavity. However, the use of rounded edges alone will not produce a solid composition stick that exhibits increased resistance to failure arising from vibration while in use.

By the term "snugly receive", "snugly fit" it is meant that the nib member of one stick is releasably received in the cavity of a corresponding stick, such that there are no substantial gaps between the nib and the cavity walls.

By the term "length of one side face" or "length of the side face" it is meant the distance from one side edge to the opposed side edge of one side face. As described herein by side edges it is meant the edges between the four side faces of the nib member or body member.

According to a second embodiment of the present invention, there is provided an interlocking solid stick comprising a body member with four side faces, a first end and an opposed second end, and a nib member joined to the first end of the body member, the nib member having four side faces connected by substantially straight side edges, wherein the second end of the body member contains a cavity with substantially straight side walls dimensioned to snugly receive a nib member of a corresponding interlocking solid stick and wherein a length of one side face of the nib member (nl) and a length of the side face of the body member (1) in the same plane has a ratio nl/l from about 0.75 to about 0.95. Preferably the ratio nl/l of the interlocking solid stick is from about 0.8 to about 0.9; more preferably the ratio nl/l is from about 0.82 to about 0.87. Furthermore, the cross-sectional shape of nib member of the interlocking stick of this aspect of the present invention is preferably substantially rectangular.

By the term "substantially straight side edges" and "substantially straight side walls" it is meant that the side edges of the nib member and side walls of the cavity are not curved or rounded but are generally sharp defined edges. As hereinbefore described, by side edges it is meant the edges between the four side faces of the nib member, and not other edges, such as an edge between one side and one end of the nib member.

The ratio "nl/l" defines the relationship between the length of one side face of the body member and the length of the side face of the nib member in the same plane. The distance from side edge to side edge of the side face of the nib member is divided by the distance from side edge to side edge of the side face of the body member in the same plane to give the ratio nl/l. The body member and nib member may both have two opposed side faces that are longer than the other two opposed side faces. In this case, it is the length of one of the longer side faces for both the nib member and the body member that are compared to obtain the ratio nl/l.

A number of interlocking solid composition sticks of the present invention may be nested one on top of the other and loaded into an applicator for application of the stick composition to a steel surface. The applicator may be provided with a spring-loaded mechanism against which the stick is loaded. The spring-loaded mechanism provides pressure against the stick during application so that the stick is available for application to a steel surface, such as a passenger rail or locomotive wheel. As the passenger rail or locomotive wheels turn, the solid stick rubs off onto the wheels like a crayon and leaves a dry thin film. This thin film transfers to the rail face. Non-limiting examples of straight applicators include those disclosed in US 4,811,818, US 5,054,582, US 5,251,724, US 5,337,860, US 2003 0101897, and those available from Kelsan Technologies (North Vancouver, Canada). Circular applicators may also be used with the solid stick of the present invention. An example of a circular applicator includes, but is not limited to those available from Kelsan Technologies (North Vancouver, Canada). The interlocking solid sticks of the present invention may be curved for application by a circular applicator.

Wheel squeal associated with a curved track may be caused by several factors including wheel flange contact with the rail gauge face, and stick-slip due to lateral creep of the wheel across the rail head. Without wishing to be bound by theory, lateral creep of the wheel across the rail head is thought to be the most probable cause of wheel squeal, while wheel flange contact with the rail gauge playing an important, but secondary role. Studies, as described herein, demonstrate that different friction control compositions may be applied to different faces of the rail-wheel interface to effectively control wheel squeal. For example, a composition with a positive friction characteristic exhibiting an intermediate, high or very high coefficient of friction may be applied to the head of the rail- wheel interface to reduce lateral slip-stick of the wheel tread across the rail head, and a low friction control composition exhibiting a low coefficient of friction, may be applied to the gauge face of the rail-wheel flange to reduce the flanging effect of the lead axle of a train car.

The co-efficient of friction may be measured using any suitable devise for example a push tribometer, or TriboRailer (H. Harrison, T. McCanney and J. Cotter (2000), Recent Developments in COF Measurements at the Rail/Wheel Interface, Proceedings The 5th International Conference on Contact Mechanics and Wear of Rail/Wheel Systems CM 2000 (SEIKEN Symposium No. 27), pp. 30 - 34).

A composition having a Low Coefficient of Friction (LCF) can be characterized as having a coefficient of friction of less than about 0.2 when measured with a push tribometer. Preferably, under field conditions, LCF exhibits a coefficient of friction of about 0.15 or less. A positive friction characteristic is one in which friction between the wheel and rail systems increases as the creepage of the system increases. As described herein, a composition having a High Positive Friction (HPF) can be characterized as having a coefficient of friction from about 0.28 to about 0.4 when measured with a push tribometer. Preferably, under field conditions, HPF exhibits a coefficient of friction of about 0.35. A composition having a Very High Positive Friction (VHPF) can be characterized as having a coefficient of friction from about 0.45 to about 0.55 when measured with a push tribometer. Preferably, under field conditions, VHPF exhibits a coefficient of friction of 0.5.

When a lubricant is included in an interlocking solid stick without a friction modifier the composition will typically have a low coefficient of friction. Inclusion of a friction modifier in an interlocking solid stick generally provides compositions with an intermediate, high or very high coefficient of friction.

The interlocking solid stick of the present invention preferably comprises a composition having a low coefficient of friction (LCF) suitable for application to the gauge face of a rail-wheel flange.

A benefit associated with the use of the LCF solid sticks of the present invention is the reduction of energy consumption as measured by, for example but not limited to, drawbar force, associated with steel-rail and steel-wheel systems of freight and mass transit systems. The reduction of energy consumption has an associated decrease in operating costs.

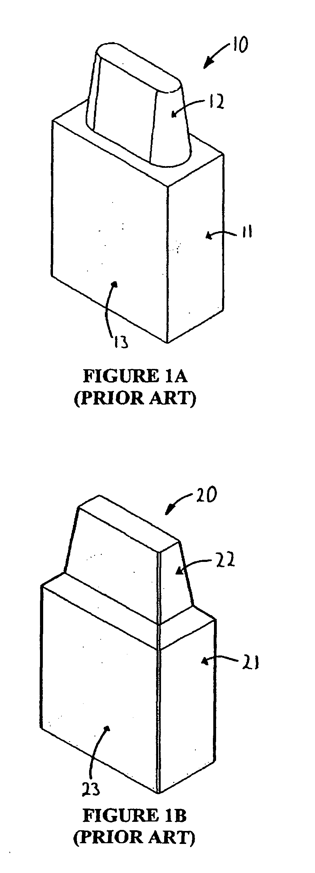

Figure 1 shows examples of prior art interlocking solid sticks (10, 20). The sticks (10, 20) generally comprise a rectangular shaped block (11, 21) with a tapered nib (12, 22). The nib (12, 22) is positioned at one end of the block (11, 21), with the opposed end of the block (11, 21) having a cavity (13, 23) therein. The dimensions of the cavity (13, 23) approximate the dimensions of the nib (12, 22), such that the nib (12, 22) of one stick (10, 20) can snugly fit into the cavity (13, 23) of a corresponding stick (10, 20). In Figure 1A the nib (12) has rounded or curved side edges and the cavity (13) has correspondingly curved or rounded side walls. In Figure 1B the side edges of the nib (22) are straight, sharp defined edges as are the walls of the cavity (23).

The interlocking solid sticks of the prior art shown in Figure 1 may be applied in both transit and freight rail systems where the stick is subjected to high vibration and shock conditions, which can cause failure of the stick. Either or both of the cavity or nib can fail in the field, however failure usually occurs at the cavity end. The nib of the stick applies loads to the cavity end resulting in high stresses at the inside corners of the cavity and the top of the stick.

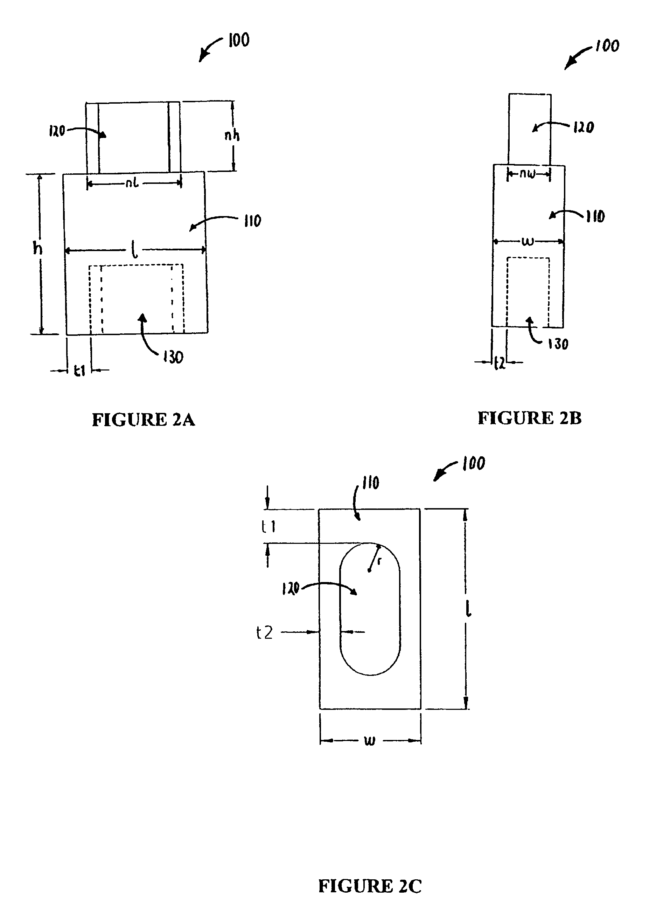

Referring to Figure 2, there is shown an example of an interlocking solid stick (100) of the present invention comprising a rectangular shaped block (110) and an oval-shaped nib (120). The nib (120) is positioned at one end of the block (110), with the opposed end of the block (110) having a cavity (130) therein. As shown in Figure 2C, the nib (120) has a generally oval cross-sectional shape, with a flat top and flat bottom and rounded side edges. The cavity (130) is also oval-shaped with rounded walls. The internal wall of the cavity (130) has approximately the same dimensions as the outer surface of the nib (120), such that a nib (120) of one stick can snugly fit into the cavity (130) of a second stick. The height (h), width (w) and length (l) of the block are indicated in Figure 2, as well as the nib height (nh), nib width (nw), nib length (nl) and radius (r) of the semi-circular ends of the nib.

As hereinbefore described in more detail, the length (1) of the block (body member) is the distance from side edge to side edge of one side face and the nib length (nl) is the distance from side edge to side edge of the side face of the nib in the same plane. In Figure 2, two opposed side faces of the block are wider than the other two opposed side faces. The length (1) of the block is the length of one of the two wider side faces. Furthermore, two opposed side faces of the nib are wider than the other two opposed side faces. The nib length (nl) is the length of one of the two wider side faces measured at the base of the nib where the nib joins the block.

The ratio nl/l for the interlocking solid stick of a first embodiment of the present invention wherein the side edges of the nib are curved is from about 0.6 to about 0.75, or any ratio therebetween, for example, from about 0.62 to about 0.75, from about 0.64 to about 0.75, from about 0.67 to about 0.73, from about 0.68 to about 0.72, from about 0.69 to about 0.71, and any ratio therebetween, or about 0.60, 0.61, 0.62, 0.63, 0.64, 0.65, 0.66, 0.67, 0.68, 0.69, 0.70, 0.71, 0.72, 0.73, 0.74, and 0.75 and any amount therebetween.

The ratio nl/l for the interlocking solid stick of a second embodiment of the present invention wherein the side edges of the nib are substantially straight is from about 0.75 to about 0.95, or any ratio therebetween, for example, from about 0.76 to about 0.94, from about 0.77 to about 0.93, from about 0.78 to about 0.92, from about 0.79 to about 0.91, from about 0.80 to about 0.90, from about 0.81 to about 0.89, from about 0.82 to about 0.88, from about 0.82 to about 0.87, from about 0.83 to about 0.86, from about 0.84 to about 0.85, and any ratio therebetween, or about 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, and 0.95 and any amount therebetween.

As both the cavity and nib of interlocking solid sticks can fail in the field; the cavity, the nib, or both the nib and the cavity may be modified to ensure an optimised composition stick that results to reduce breakage to the cavity, nib, or both. Preferably, both the nib and cavity are designed in a complimentary manner.

Without wishing to be limiting in any manner, the ratio of nl/l in the range from about 0.6 to about 0.75 has been found to be an optimal ratio for the dimensions of the nib and cavity when the side edges of the nib are curved or rounded, so that the maximum nib and maximum cavity stresses are approximately equal. From example, the ratio nl/l of the interlocking solid stick of the present invention wherein the side edges of the nib are curved may be from about 0.67 to about 0.73.

Without wishing to be limiting in any manner, the ratio of nl/l in the range from about 0.75 to about 0.95 has been found to be an optimal ratio for the dimensions of the nib and cavity when the side edges of the nib are straight, so that the maximum nib and maximum cavity stresses are approximately equal. From example, the ratio nl/l of the interlocking stick of the present invention wherein the side edges of the nib are straight may be from about 0.82 to about 0.87.

The length of the block (1) of the interlocking solid stick of the present invention is preferably from about 10 to about 70 mm, or any length therebetween, for example from about 15 to about 70 mm, from about 20 to about 70 mm, from about 25 to about 70 mm, from about 30 to about 70 mm, from about 32 to about 68 mm, from about 34 to about 66 mm, from about 36 to about 64 mm, from about 38 to about 62 mm, from about 40 to about 60 mm, from about 42 to about 58 mm, from about 44 to about 56 mm, from about 46 to about 54 mm, from about 48 to about 52 mm, and any length therebetween, or about 10, 12, 14, 16, 18 ,20 ,22 ,24 ,26 ,28, 30, 32, 34, 36, 38, 40, 42, 44, 46, 48, 50, 52, 54, 56, 58, 60, 62, 64, 66, 68, and 70 mm, or any amount therebetween.

As shown in Figure 2B, the width of the block (w) is the distance from side edge to side edge of one of the two narrower opposed side faces of the block. The width of the block (w) of the interlocking solid stick of the present invention is preferably from about 10 to about 35 mm, or any width therebetween, for example from about 13 to about 35 mm, from about 15 to about 35 mm, from about 17 to about 33 mm, from about 19 to about 31 mm, from about 21 to about 29 mm, from about 23 to about 27 mm, from about 24 to about 26 mm, and any width therebetween, or about 10, 11, 12, 13, 14, 15, 16, 17, 18, 19, 20, 21, 22, 23, 24, 25, 26, 27, 28, 29, 30, 31, 32, 33, 34, and 35 mm, or any amount therebetween.

As shown in Figure 2A, the height of the block (h) is the distance from the first end of the block to the second end of the block; the first end having the nib thereon and the second end having the cavity therein. The height of the block (h) of the interlocking solid stick of the present invention is preferably from about 25 to about 200 mm, or any height therebetween, for example from about 25 to about 175 mm, from about 25 to about 150 mm, from about 25 to about 125 mm, from about 25 to about 100 mm, from about 30 to about 90 mm, from about 35 to about 80 mm, from about 40 to about 70 mm, from about 45 to about 65 mm, from about 40 to about 60 mm, and any width therebetween, or about 25, 30, 35, 40, 45, 50, 55, 60, 65, 70, 75, 80, 85, 90, 95, 100, 110, 120, 130, 140, 150, 160, 170, 180, 190, and 200 mm, or any amount therebetween.

As shown in Figure 2A, the nib height (nh) is the height of the nib from the nib base, which is joined to the block, to the top of the nib. The nib height (nh) of the interlocking solid stick of the present invention is preferably from about 15 to about 30 mm, or any height therebetween, for example from about 16 to about 29 mm, from about 17 to about 28 mm, from about 18 to about 27 mm, from about 19 to about 26 mm, from about 20 to about 25 mm, from about 20.5 to about 24.5 mm, from about 21.0 to about 24.0 mm, from about 21.5 to about 23.5 mm, from about 22.0 to about 23.0 mm, and any height therebetween, or about 15, 16, 17, 18, 19, 20.0, 20.5, 21.0, 21.5, 22.0, 22.5, 23.0, 23.5, 24.0, 24.5, 25.0, 26, 27, 28, 29, and 30 mm, or any amount therebetween.

With reference to Figure 2A, t1 denotes the distance between the side edge of the block (110) and the side edge of the nib (120) measured at the base of the nib (120) where the nib (120) joins the block (110). The nib length (nl) is represented by the following equation:

$$nl = l - (2 \times t1)$$

where 1 is the block length.

As shown in Figure 2B, t2 denotes the distance between the front edge of the block (110) and the front edge of the nib (120) measured at the base of the nib (120) where the nib (120) joins the block (110). The nib width (nw) is the distance from side edge to side edge of one of the two narrower opposed side faces of the nib, measured at the base of the nib where the nib joins the block. The nib width (nw) is represented by the following equation:

$$nw = w - (2 \times t2)$$

where w is the block width.

The ratio of t1/t2 of the interlocking solid stick of the present invention preferably approximately equals the ratio of the block length/block width (l/w). However variations around this ratio may also be used. The ratio of t1/t2 of the interlocking solid stick of the present invention is preferably from about 1.2 to about 2.8, or any ratio therebetween, for example, from about 1.3 to about 2.7, from about 1.4 to about 2.6, from about 1.5 to about 2.5, from about 1.6 to about 2.4, from about 1.7 to about 2.3, from about 1.8 to about 2.2, from about 1.9 to about 2.1, and any ratio therebetween, or about 1.2, 1.3, 1.4, 1.5, 1.6, 1.7, 1.8, 1.9, 2.0, 2.1, 2.2, 2.3, 2.4, 2.5, 2.6, 2.7, and 2.8, and any amount therebetween.

For the interlocking solid stick of the present invention, t1 is preferably from about 2 to about 13 mm, or any length therebetween, for example from about 3 to about 13 mm, from about 4 to about 12 mm, from about 5 to about 11 mm, from about 6 to about 10 mm, from about 7 to about 9 mm, and any length therebetween, or about 3, 4, 5, 6, 7, 8, 9, 10, 11, 12, and 13 mm, or any amount therebetween.

For the interlocking solid stick of the present invention, t2 is preferably from about 1.5 to about 5.0 mm, or any length therebetween, for example from about 1.75 to about 4.8 mm, from about 2.0 to about 4.6 mm, from about 2.0 to about 2.5 mm from about 3.2 to about 4.4 mm, from about 3.4 to about 4.2 mm, from about 3.6 to about 4.0 mm, and any length therebetween, or about 3.0, 3.1, 3.2, 3.3, 3.4, 3.5, 3.6, 3.7, 3.8, 3.9, 4.0, 4.1, 4.2, 4.3, 4.4, 4.5, and 4.6 mm, or any amount therebetween.

The cross-sectional shape of nib member of the interlocking stick of the present invention is preferably substantially oval. An example of a nib with an oval cross section is shown in Figure 2, where two opposed sides of the nib member are arched. As shown in Figure 2C, the radius (r) is the radius of the two semi-circular ends of the nib (120). The radius (r) is suitably from about 5.0 to about 12.0, or any radius therebetween, for example from about 5.5 to about 11.5, from about 6.0 to about 11.0, from about 6.5 to about 10.5, from about 7.0 to about 10.0, from about 7.5 to about 9.5, from about 8.0 to about 9.0, and any radius therebetween, or about 5.0, 55.5, 6.0, 6.5, 7.0, 7.5, 8.0, 8.5, 9.0, 9.5, 10.0, 10.5, 11.0, 11.5, and 12.0, or any amount therebetween.

The cross-sectional area of the nib (An) is the nib length (nl) x nib width (nw) measured at the base of the nib where the nib joins the block. The cross-sectional area of the block (Ab) is the length of the block (l) x width of the block (w).

The ratio of nib cross-sectional area/block cross-sectional area (An/Ab) for the interlocking stick of the first embodiment of the present invention wherein the side edges of the nib are curved is preferably from about 0.35 to about 0.50, or any ratio therebetween, for example from about 0.37 to about 0.48, from about 0.39 to about 0.46, from about 0.41 to about 0.44, and any ratio therebetween, or about 0.35, 0.36, 0.37, 0.38, 0.39, 0.40, 0.41, 0.42, 0.43, 0.44, 0.45, 0.46, 0.47, 0.48, 0.49, and 0.50, or any amount therebetween.

The ratio of nib cross-sectional area/block cross-sectional area (An/Ab) for the interlocking stick of the second embodiment of the present invention wherein the side edges of the nib are straight is preferably from about 0.55 to about 0.75, or any ratio therebetween, for example from about 0.56 to about 0.74, from about 0.57 to about 0.73, from about 0.58 to about 0.72, from about 0.59 to about 0.71, from about 0.60 to about 0.70, from about 0.61 to about 0.69, from about 0.62 to about 0.68, from about 0.63 to about 0.67 and any ratio therebetween, or about 0.55, 0.56, 0.57, 0.58, 0.59, 0.60, 0.61, 0.62, 0.63, 0.64, 0.65, 0.66, 0.67, 0.68, 0.69, 0.70, 0.71, 0.72, 0.73, 0.74, and 0.75, or any amount therebetween.

The dimensions of the cavity (130) are approximately equal the dimension of the nib (120), for example the height, length, width, radius, cross-sectional area of the cavity (130) are approximately equal the corresponding dimension of the nib (120).

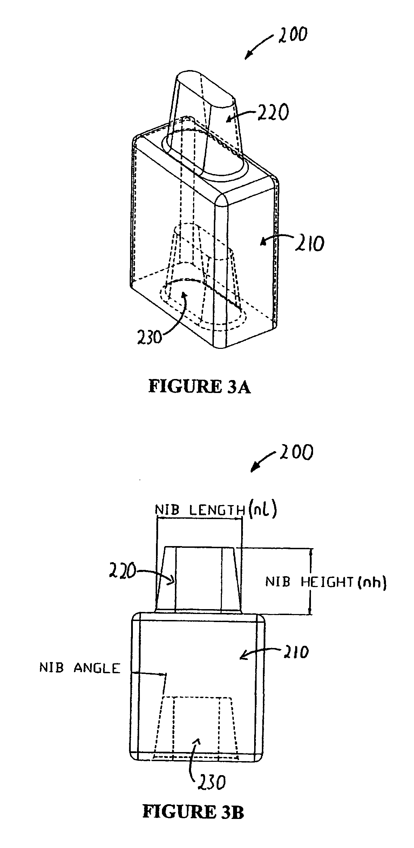

Figure 3 shows another example of an interlocking stick (200) of the present invention. The nib (220) has semi-circular ends, such that the cross-sectional shape of the nib (220) is substantially oval, the nib having a flat top and flat bottom. The nib (220) tapers away from block (210). The cavity (230) is corresponding shaped to approximate the dimensions of the nib (220) with the cavity walls tapering away from the bottom edge of the block (210). The angle of tapering of the nib and cavity walls is given as nib angle in Figure 3B. The nib length (nl) and nib width (nw) are measured at the base of the nib where the nib joins the block and therefore represent the maximum cross-sectional area of the nib (An), wherein An = nl x nw.

The nib member of the interlocking stick of the present invention preferably tapers away from the body member (block) at an angle of taper. The angle of taper for the interlocking stick of the present invention is preferably from about 7.0 to about 10.0 degrees, or any angle therebetween, for example from about 7.25 to about 9.75 degrees, from about 7.5 to about 9.5 degrees, from about 7.75 to about 9.25 degrees, from about 8.0 to about 9.0 degrees, from about 8.25 to about 8.75 degrees and any angle therebetween, or about 7.0, 7.25, 7.5, 7.75, 8.0, 8.25, 8.5, 8.75, 9.0, 9.25, 9.5, 9.75, or 10.0 degrees, or any amount therebetween.

In Figure 3, the side and top edges of the block (210) are curved. Without wishing to be bound by theory, sharp corners and edges may result in increased stress concentration areas in the cavity (230). Therefore, provision of rounded edges for the nib, cavity and block may advantageously reduce stress on the cavity (230). However, composition sticks that do not comprise a curved side edge and a curved top edge may also be prepared using the optimisations of the nib and cavity as described herein to produce a composition stick with improved properties.

At least one side edge of the body member (block) of the interlocking stick of the present invention may be substantially curved. Preferably all of the side edges are substantially curved. Furthermore, at least one edge of the first end of the body member may be substantially curved. Preferably all of the edges of the first end of the body member are substantially curved.

By the term "edges of the first end of the body member" it is meant the edges between the first end of the body member and the four body member side faces. As described herein by the term "curved" it is meant that the edges are substantially rounded and not sharp.

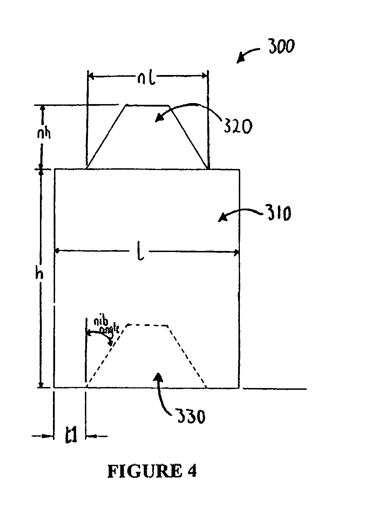

Figure 4 shows a further example of an interlocking stick (300) of the present invention. In this example, the nib (320) and cavity (330) both have a substantially flattened truncated cone shaped. The nib member of the interlocking solid stick of the present invention is preferably a substantially flattened truncated cone.

By the term "substantially flattened truncated cone" it is meant that the cone is flattened such that two opposed side edges of the cone are brought in towards each other and truncated such that the top pointed portion of the cone is not present and is replaced by a flat top end.

The orientation of the interlocking solid sticks shown in Figures 2 to 4 are for illustrative purposes only.

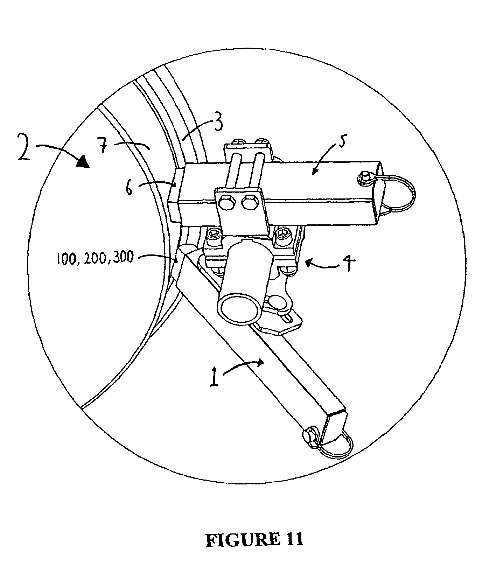

Figure 11 shows an example of an applicator (1) for application of an LCF interlocking solid stick (100, 200, 300) of the present invention to the gauge face (3) of the flange of the rail-wheel (2). A number of interlocking sticks (100, 200, 300), nested one on top of the other, are loaded into the applicator (1) block end first, so that the second end of the block with the cavity therein, contacts the gauge face (3) of the rail-wheel flange. The applicator (1) is provided with a spring-loaded mechanism (not shown) against which the sticks are loaded. The spring-loaded mechanism provides pressure against the sticks during application. As the passenger rail car or locomotive wheel (2) turns, the LCF composition rubs off onto the gauge face (3) like a crayon and leaves a dry thin film.

The applicator (1) is attached to a bogie or axle of a rail car by a bracket assembly (4). The bracket assembly (4) also holds a second spring-loaded applicator (5), which is loaded with a number of interlocking solid sticks (6) having a HPF or VHPF composition. The HPF or VHPF stick (6) is applied to the top face (7) of the wheel (2).

The present invention will be further illustrated in the following examples. However, it is to be understood that these examples are for illustrative purposes only.

**Example 1: Optimisation of Nib Dimensions**

As described herein, both the cavity and the nib can fail in the field; therefore the cavity cannot be over designed causing the nib to break prematurely or vice versa. The nib and cavity design need to be optimized such that the stresses applied to the nib are approximately equal the stresses applied to the cavity so that neither is likely to fail over the other.

Basic Loading Assumption

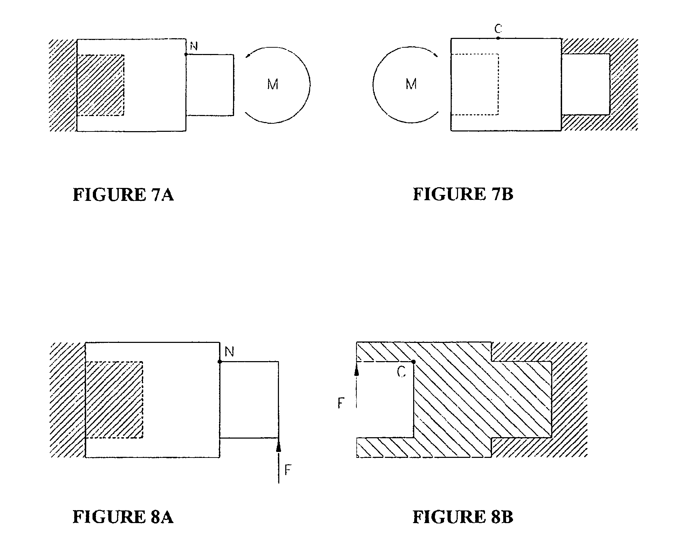

As a first order analysis, the assumption was made that when the interlocking sticks are used for application of an LCF composition to a surface, a bending moment *M* is induced in the cavity by the nib end of the front stick in the system. An equal and opposite moment *M* is applied to the nib. Although the actual dynamics and boundary conditions of the sticks in the field were not known, the assumption that the sticks are fixed in space as shown in Figure 7 was made to reduce the complexity of the problem. Given an applied moment *M* and working out the moments of inertias for both the nib and cavity, the stresses at the points of the highest stress on the nib (point *N* in Figure 7A) and cavity (point *C* in Figure 7B) were calculated.

Stress calculation models

The stress factor at points C and N were calculated for different interlocking solid stick models as follows:

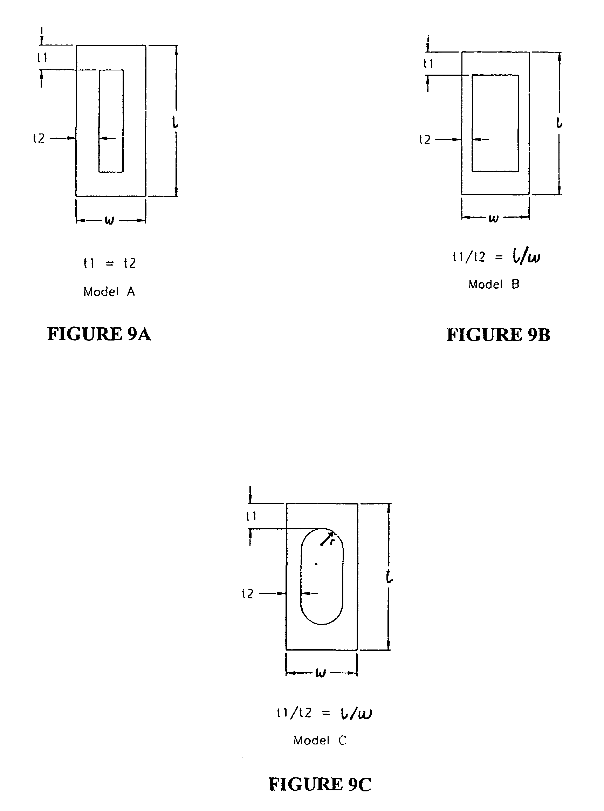

**Model A** is shown in Figure 9A and comprised a rectangular block and a rectangular nib with defined sharp edges. The width (w), length (l) and height (h) of the block were kept constant. The nib height (nh) also remained constant.

As described herein the nib length (nl) is represented by the equation: nl = 1 - (2 x t1), where 1 is the block length; and the nib width (nw) is represented by the equation: nw = w - (2 x t2), where w is the block width. In Model A the nib length (nl) and nib width (nw) were varied by increasing t1 and t2 by 0.25mm increments, wherein t1 = t2. The internal dimensions of the cavity were approximately equal to the external dimensions of the nib. Stress factors at points C and N were calculated for each 0.25mm increment increase and the results are given in Table 1.

**Table 1: Stress factor results for Model A**

| w (mm) | I (mm) | t1 & t2 (mm) | I1 (mm⁴) | I2 (mm⁴) | Stress factor at C (1/mm³) | Stress factor at N (1/mm³) | An/Ab | nl/l |
|---|---|---|---|---|---|---|---|---|
| 24.5 | 49.54 | 1.00 | 248229 | 201455 | 0.000530 | 0.000118 | 0.88 | 0.96 |
| 24.5 | 49.54 | 1.25 | 248229 | 190829 | 0.000432 | 0.000123 | 0.85 | 0.95 |
| 24.5 | 49.54 | 1.50 | 248229 | 180608 | 0.000366 | 0.000129 | 0.82 | 0.94 |
| 24.5 | 49.54 | 1.75 | 248229 | 170783 | 0.000320 | 0.000135 | 0.80 | 0.93 |
| 24.5 | 49.54 | 2.00 | 248229 | 161344 | 0.000285 | 0.000141 | 0.77 | 0.92 |
| 24.5 | 49.54 | 2.25 | 248229 | 152280 | 0.000258 | 0.000148 | 0.74 | 0.91 |
| 24.5 | 49.54 | 2.50 | 248229 | 143583 | 0.000237 | 0.000155 | 0.72 | 0.90 |
| 24.5 | 49.54 | 2.75 | 248229 | 135243 | 0.000219 | 0.000163 | 0.69 | 0.89 |
| 24.5 | 49.54 | 3.00 | 248229 | 127249 | 0.000205 | 0.000171 | 0.66 | 0.88 |
| 24.5 | 49.54 | 3.25 | 248229 | 119594 | 0.000193 | 0.000180 | 0.64 | 0.87 |
| 24.5 | 49.54 | 3.50 | 248229 | 112266 | 0.000182 | 0.000189 | 0.61 | 0.86 |
| 24.5 | 49.54 | 3.75 | 248229 | 105258 | 0.000173 | 0.000200 | 0.59 | 0.85 |
| 24.5 | 49.54 | 4.00 | 248229 | 98560 | 0.000165 | 0.000211 | 0.56 | 0.84 |
| 24.5 | 49.54 | 4.25 | 248229 | 92164 | 0.000159 | 0.000223 | 0.54 | 0.83 |
| 24.5 | 49.54 | 4.50 | 248229 | 86060 | 0.000153 | 0.000236 | 0.52 | 0.82 |
| 24.5 | 49.54 | 4.75 | 248229 | 80240 | 0.000147 | 0.000250 | 0.49 | 0.81 |
| 24.5 | 49.54 | 5.00 | 248229 | 74696 | 0.000143 | 0.000265 | 0.47 | 0.80 |
| 24.5 | 49.54 | 5.25 | 248229 | 69419 | 0.000139 | 0.000281 | 0.45 | 0.79 |
| 24.5 | 49.54 | 5.50 | 248229 | 64400 | 0.000135 | 0.000299 | 0.43 | 0.78 |
| 24.5 | 49.54 | 5.75 | 248229 | 59633 | 0.000131 | 0.000319 | 0.41 | 0.77 |

wherein:

I1 = moment of inertia of block cross-sectional area (Ab)
I2 = moment of inertia of nib cross-sectional area (An)
An/Ab = ratio of nib cross-sectional area / block cross-sectional area; and
nl/l = ratio of nib length / block length.

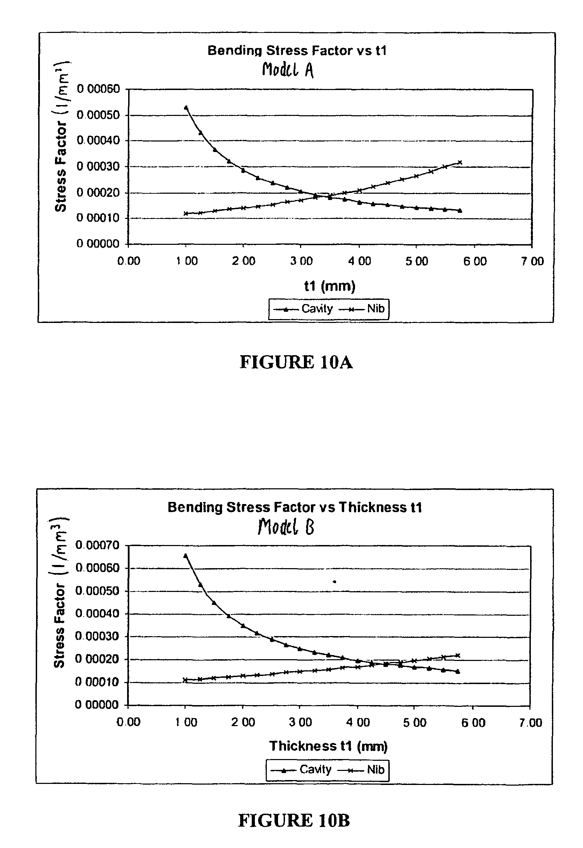

As t1 & t2 increased, the wall of the cavity got thicker thereby reducing the stress at point C; meanwhile, the size of the nib decreased and increased the stress at point N. The stress values at point C and point N were plotted against the length of t1 and the graph is shown in Figure 10A. The graph indicates that the point of optimization where the stress at point C is approximately equal the stress at point N is when t1 is about 3.3 mm.

**Model B** is shown in Figure 9B and comprised a rectangular block and a rectangular nib with defined sharp edges. The width (w), length (l) and height (h) of the block were kept constant. The nib height (nh) also remained constant. In Model B the nib length (nl) and nib width (nw) were varied by increasing t1 by 0.25mm increments, wherein the ratio of t1/t2 = l/w. Therefore, t2 was always smaller than t1 and kept proportional to l/w. The internal dimensions of the cavity were approximately equal to the external dimensions of the nib. Stress factors at points C and N were calculated for each 0.25mm increment increase and the results are given in Table 2.

**Table 2: Stress factor results for Model B**

| w (mm) | l (mm) | t1 (mm) | t2 (mm) | I1 (mm$^4$) | I2 (mm$^4$) | Stress factor at C (1/mm$^3$) | Stress factor at N (1/mm$^3$) | An/Ab | nl/l |
|---|---|---|---|---|---|---|---|---|---|
| 24.5 | 49.54 | 1.00 | 0.49 | 248229 | 210507 | 0.000657 | 0.000113 | 0.92 | 0.96 |
| 24.5 | 49.54 | 1.25 | 0.62 | 248229 | 201789 | 0.000533 | 0.000117 | 0.90 | 0.95 |
| 24.5 | 49.54 | 1.50 | 0.74 | 248229 | 193346 | 0.000451 | 0.000120 | 0.88 | 0.94 |
| 24.5 | 49.54 | 1.75 | 0.87 | 248229 | 185170 | 0.000393 | 0.000124 | 0.86 | 0.93 |
| 24.5 | 49.54 | 2.00 | 0.99 | 248229 | 177256 | 0.000349 | 0.000128 | 0.85 | 0.92 |
| 24.5 | 49.54 | 2.25 | 1.11 | 248229 | 169599 | 0.000315 | 0.000133 | 0.83 | 0.91 |
| 24.5 | 49.54 | 2.50 | 1.24 | 248229 | 162192 | 0.000288 | 0.000137 | 0.81 | 0.90 |
| 24.5 | 49.54 | 2.75 | 1.36 | 248229 | 155031 | 0.000266 | 0.000142 | 0.79 | 0.89 |
| 24.5 | 49.54 | 3.00 | 1.48 | 248229 | 148109 | 0.000247 | 0.000147 | 0.77 | 0.88 |
| 24.5 | 49.54 | 3.25 | 1.61 | 248229 | 141422 | 0.000232 | 0.000152 | 0.75 | 0.87 |
| 24.5 | 49.54 | 3.50 | 1.73 | 248229 | 134964 | 0.000219 | 0.000158 | 0.74 | 0.86 |
| 24.5 | 49.54 | 3.75 | 1.85 | 248229 | 128730 | 0.000207 | 0.000163 | 0.72 | 0.85 |
| 24.5 | 49.54 | 4.00 | 1.98 | 248229 | 122714 | 0.000197 | 0.000169 | 0.70 | 0.84 |
| 24.5 | 49.54 | 4.25 | 2.10 | 248229 | 116912 | 0.000189 | 0.000176 | 0.69 | 0.83 |
| 24.5 | 49.54 | 4.50 | 2.23 | 248229 | 111318 | 0.000181 | 0.000182 | 0.67 | 0.82 |
| 24.5 | 49.54 | 4.75 | 2.35 | 248229 | 105927 | 0.000174 | 0.000189 | 0.65 | 0.81 |
| 24.5 | 49.54 | 5.00 | 2.47 | 248229 | 100734 | 0.000168 | 0.000196 | 0.64 | 0.80 |
| 24.5 | 49.54 | 5.25 | 2.60 | 248229 | 95734 | 0.000162 | 0.000204 | 0.62 | 0.79 |
| 24.5 | 49.54 | 5.50 | 2.72 | 248229 | 90923 | 0.000157 | 0.000212 | 0.61 | 0.78 |
| 24.5 | 49.54 | 5.75 | 2.84 | 248229 | 86296 | 0.000153 | 0.000220 | 0.59 | 0.77 |

wherein:

> I1 = moment of inertia of block cross-sectional area (Ab)
> I2 = moment of inertia of nib cross-sectional area (An)
> An/Ab = ratio of nib cross-sectional area / block cross-sectional area; and
> nl/l = ratio of nib length / block length.

The stress values at point C and point N given in Table 2 were plotted against the length of t1 and the graph is shown in Figure 10B. The graph indicates that the point of optimization where the stress at point C is approximately equal the stress at point N is when t1 is about 4.5 mm.

**Model C** is shown in Figure 9C and comprised a rectangular block and a nib with curved side edges. Two opposed side edges of the nib were semi-circular, such that the cross-sectional shape of the nib was substantially oval. The width (w), length (l) and height (h) of the block were kept constant. The nib height (nh) also remained constant. In Model C the nib length (nl) and nib width (nw) were varied by increasing t1 by 0.25mm increments, wherein the ratio of t1/t2 = l/w. Therefore, t2 was always smaller than t1 and kept proportional to l/w. The radius (r) of the semi-circular ends of the nib decreased as t1 increased. The internal dimensions of the cavity were approximately equal to the external dimensions of the nib. Stress factors at points C and N were calculated for each 0.25mm increment increase and the results are given in Table 3.

**Table 3: Stress factor results for Model C**

| w (mm) | l (mm) | t1 (mm) | t2 (mm) | r | Icirc (mm$^4$) | I1 (mm$^4$) | I2 (mm$^4$) | Stress factor at C (1/mm$^3$) | Stress factor at N (1/mm$^3$) | An/Ab | nl/l |
|---|---|---|---|---|---|---|---|---|---|---|---|
| 24.5 | 49.54 | 6.00 | 2.97 | 9.28 | 147970.33 | 248229 | 158539 | 0.000276 | 0.000118 | 0.51 | 0.76 |
| 24.5 | 49.54 | 6.25 | 3.09 | 9.16 | 140243.09 | 248229 | 150260 | 0.000253 | 0.000123 | 0.50 | 0.75 |
| 24.5 | 49.54 | 6.50 | 3.21 | 9.04 | 132822.52 | 248229 | 142310 | 0.000234 | 0.000128 | 0.49 | 0.74 |
| 24.5 | 49.54 | 6.75 | 3.34 | 8.91 | 125700.41 | 248229 | 134679 | 0.000218 | 0.000134 | 0.47 | 0.73 |
| 24.5 | 49.54 | 7.00 | 3.46 | 8.79 | 118868.63 | 248229 | 127359 | 0.000205 | 0.000140 | 0.46 | 0.72 |
| 24.5 | 49.54 | 7.25 | 3.59 | 8.66 | 112319.19 | 248229 | 120342 | 0.000194 | 0.000146 | 0.45 | 0.71 |
| 24.5 | 49.54 | 7.50 | 3.71 | 8.54 | 106044.19 | 248229 | 113619 | 0.000184 | 0.000152 | 0.43 | 0.70 |
| 24.5 | 49.54 | 7.75 | 3.83 | 8.42 | 100035.87 | 248229 | 107181 | 0.000176 | 0.000159 | 0.42 | 0.69 |
| 24.5 | 49.54 | 8.00 | 3.96 | 8.29 | 94286.56 | 248229 | 101021 | 0.000168 | 0.000166 | 0.41 | 0.68 |
| 24.5 | 49.54 | 8.25 | 4.08 | 8.17 | 88788.703 | 248229 | 95131 | 0.000162 | 0.000174 | 0.40 | 0.67 |
| 24.5 | 49.54 | 8.50 | 4.20 | 8.05 | 83534.861 | 248229 | 89502 | 0.000156 | 0.000182 | 0.39 | 0.66 |
| 24.5 | 49.54 | 8.75 | 4.33 | 7.92 | 78517.704 | 248229 | 84126 | 0.000151 | 0.000190 | 0.37 | 0.65 |
| 24.5 | 49.54 | 9.00 | 4.45 | 7.80 | 73730.014 | 248229 | 78996 | 0.000146 | 0.000200 | 0.36 | 0.64 |
| 24.5 | 49.54 | 9.25 | 4.57 | 7.68 | 69164.686 | 248229 | 74105 | 0.000142 | 0.000209 | 0.35 | 0.63 |
| 24.5 | 49.54 | 9.50 | 4.70 | 7.55 | 64814.726 | 248229 | 69444 | 0.000139 | 0.000220 | 0.34 | 0.62 |
| 24.5 | 49.54 | 9.75 | 4.82 | 7.43 | 60673.252 | 248229 | 65007 | 0.000135 | 0.000231 | 0.33 | 0.61 |

wherein:

r = radius of semi-circular nib edges;
Icirc = moment of inertia of cross-sectional area of both semi-circular nib ends
I1 = moment of inertia of block cross-sectional area (Ab)
I2 = moment of inertia of nib cross-sectional area (An)
An/Ab = ratio of nib cross-sectional area / block cross-sectional area; and
nl/l = ratio of nib length / block length.

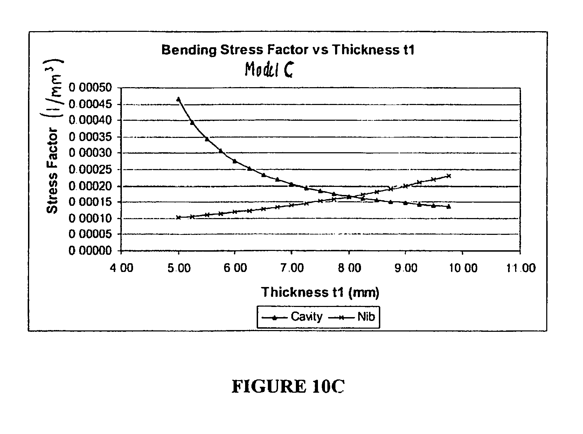

The stress values at point C and point N given in Table 3 were plotted against the length of t1 and the graph is shown in Figure 10C. The graph indicates that the point of optimization where the stress at point C is approximately equal the stress at point N is when t1 is about 8.0mm.

Model C appeared to be the best optimization model as the point of convergence of the nib and cavity stress factors was considerably lower in Model C than Models A and B. For models A to C, the convergent stress factor values were 0.000186, 0.000182, and 0.000167 $1/mm^3$ respectively.

Model C was therefore used to calculate optimal nib dimensions for prior art interlocking sticks. In other words, the block dimensions (i.e. block width (w), block length (1), and block height (h)) of known interlocking solid sticks where measured and entered into Model C wherein the two opposed side edges of the nib were semi-circular and the ratio of t1/t2 = l/w. The lengths of t1 and t2 which provided equal stress factor values at points N and C were calculated and are given in Table 4. Table 4 also shows the radius (r) of the semi-circular edge, the ratio of nib cross-sectional area/block cross-sectional area (An/Ab) and the ratio of nib length / block length (nl/l).

For comparison with the results obtained for the prior art sticks entered into Model C, the nib and block dimensions of the prior art stick (Rekofa™) shown in Figure 1A with curved nib edges, were entered into Table 4 and the nib and cavity stress factors (N & C), the ratio of An/Ab and the ratio of nl/l were calculated. These results are given in italic in Table 4.

**Table 4: Prior art stick results**

| | w (mm) | l (mm) | t1 (mm) | t2 (mm) | r | I1 (mm$^4$) | I2 (mm$^4$) | Stress factor at C (1/mm$^3$) | Stress factor at N (1/mm$^3$) | An/Ab | nl/l |
|---|---|---|---|---|---|---|---|---|---|---|---|
| *ofa* ™ | *24.41* | *49.39* | *5.05* | *4.80* | *7.41* | *245078* | *152027* | *0.000265* | *0.000129* | *0.44* | *0.80* |
| RW012 ™ | 24.50 | 49.54 | 8.05 | 3.98 | 8.27 | 248229 | 99822 | 0.000167 | 0.000167 | 0.41 | **0.68** |
| RW010 ™ | 19.50 | 43.70 | 7.21 | 3.22 | 6.53 | 135612 | 54406 | 0.000269 | 0.000269 | 0.41 | **0.67** |
| III™ | 28.00 | 39.00 | 5.35 | 3.84 | 10.16 | 138411 | 58228 | 0.000243 | 0.000243 | 0.45 | **0.73** |
| TM | 25.40 | 63.50 | 10.57 | 4.23 | 8.47 | 541968 | 217015 | 0.000098 | 0.000098 | 0.41 | **0.67** |

wherein:

r = radius of semi-circular nib edges;
I1 = moment of inertia of block cross-sectional area (Ab)
I2 = moment of inertia of nib cross-sectional area (An)
An/Ab = ratio of nib cross-sectional area / block cross-sectional area; and
nl/l = ratio of nib length / block length.

Table 4 shows that the stress values for point C and point N for the Rekofa ™ prior art stick are not equal therefore the stick is not optimized. The stress factor for the cavity (C) is over twice as much as the stress factor for the nib (N), therefore the nib has been over designed and the cavity is the likely point of failure.

For the prior art sticks that were optimized in accordance with Model C (including provision of rounded nib side edges) the ratios of nl/l are in the range 0.67 to 0.73. The ratio of nl/l for the Rekofa™ prior art stick is 0.8, which falls outside this range.

### Example 2: Finite Element Analysis (FEA)

Finite element analysis (FEA) was performed on prior art interlocking solid sticks as shown in Figures 1A and 1B and also on an example of an optimized interlocking solid stick of the present invention with curved nib side edges as shown in Figure 3. A load equivalent to 30G on a new stick was applied to the cavity of each model while assuming the nib to be held fixed. As the strength of the cavity increases, the nib tends to become weaker due to its reduction in size. FEA analysis was also conducted on each nib to ensure that the nib will not fail before the cavity. For the FEA analysis the assumption was made that when the interlocking sticks are used for application of LCF composition to a surface, a load is induced in the cavity by the nib end of the front stick in the system. An equal and opposite load is applied to the nib. Although the actual dynamics and boundary conditions of the sticks in the field were not known, for the FEA analysis, a loading as shown in Figure 8 was assumed.

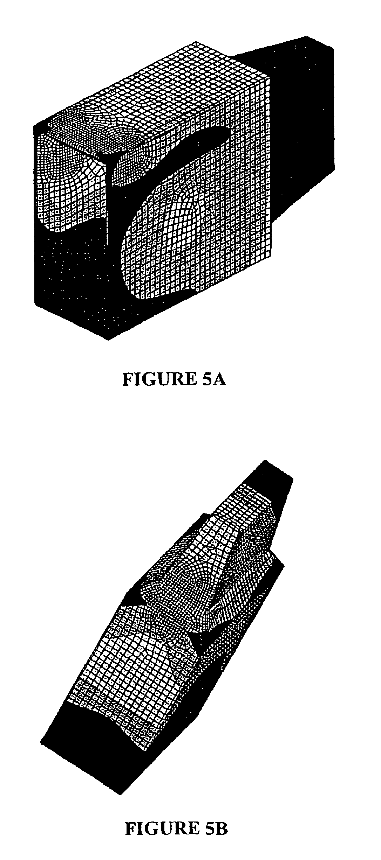

Figure 5 shows FEA output for the prior art interlocking solid stick shown in Figure I B. Figure 5A shows the FEA output of the cavity and Figure 5B shows the FEA output of the nib.

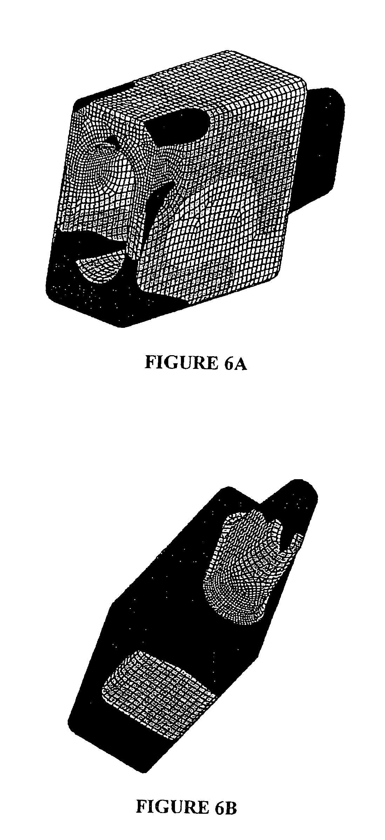

Figure 6 shows FEA output for an example of the interlocking solid stick of the present invention as shown in Figure 3. Figure 6A shows the FEA output of the cavity and Figure 6B shows the FEA output of the nib.

Using FEA the maximum stress in the cavity and the maximum stress on the top surface were calculated for both the prior art interlocking solid sticks and the example of an interlocking solid stick of the present invention as shown in Figure 3. The calculations are given in Table 5.

**Table 5: FEA calculations**

|  | Max. Stress in Cavity (MPa) | Max. Stress on Top Surface (MPa) |
| --- | --- | --- |
| Prior Art Stick (FIGURE 1B) | 0.64 | 0.47 |
| Prior Art Stick (FIGURE 1A) | 0.40 | 0.27 |
| Optimized Stick (FIGURE 3) | 0.33 | 0.13 |

Table 5 indicates that provision of curved or rounded nib side edges (Figure IB) reduces the stresses in the cavity and on the top surface of the interlocking solid stick compared to a stick with straight nib side edges (Figure 1B). The stresses are further reduced by optimizing the design of the nib and cavity.

To confirm the indications of the FEA analysis, a number of interlocking solid sticks where manufactured with the design shown in Figure 3 and tested in the field. The sticks were loaded into an axle box system mounted on a locomotive vehicle. The sticks did very well in the system and no stick failures were observed.

The present invention has been described with regard to preferred embodiments. However, it will be obvious to persons skilled in the art that a number of variations and modifications can be made.

### Claims

1. An interlocking solid stick (100) comprising a block (110) with four side faces, a first end and an opposed second end, and a nib (120) joined to the first end of the block (110), the nib (120) having four side faces connected by substantially curved side edges, wherein the second end of the block (110) contains a cavity (130) with substantially curved side walls dimensioned to snugly receive a nib (120) of a corresponding interlocking solid stick (100) **characterized in that** a length (nl) of one side face of the nib (120) and a length ($\ell$) of the side face of the block (110) in the same plane has a ratio nl/l from 0.6 to 0.75.

2. The interlocking solid stick of claim 1, wherein the ratio nl/l is from 0.67 to 0.73.

3. The interlocking solid stick of claim 1, wherein the cross-sectional shape of nib (120) is substantially oval.

4. The interlocking solid stick of claim 1, wherein the stick comprises a low coefficient of friction (LCF) composition.

5. The interlocking solid stick of claim 1, wherein the nib (120) tapers away from the block (110) at an angle of taper.

6. The interlocking solid stick of claim 5, wherein the angle of taper is from 7.0 to 10.0 degrees.

7. The interlocking solid stick of claim 1, wherein at least one of the side edges of the block (110) is substantially curved.

8. The interlocking solid stick of claim 7, wherein all of the side edges of the block (110) are substantially curved.

9. The interlocking solid stick of claim 8, wherein at least one of the edges of the first end of the block (110) is substantially curved.

10. The interlocking solid stick of claim 9, wherein all of the edges of the first end of the block (110) are substantially curved.

11. The interlocking solid stick of claim 1, wherein the nib (120) is a flattened truncated cone.

12. An interlocking solid stick (100) comprising a block (110) with four side faces, a first end and an opposed second end, and a nib (120) joined to the first end of the block (110), the nib (120) having four side faces connected by substantially straight side edges, wherein the second end of the block (110) contains a cavity (130) with substantially straight side walls dimensioned to snugly receive a nib (120) of a corresponding interlocking solid stick (100) **characterized in that** a length (nl) of one side face of the nib (120) and a lengt ($\ell$) of the side face of the block (110) in the same plane has a ratio nl/l from 0.75 to 0.95.

13. The interlocking solid stick of claim 12, wherein the ratio nl/l is from 0.8 to 0.9.

14. The interlocking solid stick of claim 12, wherein the ratio nl/l is from 0.82 to 0.87.

15. The interlocking solid stick of claim 12, wherein the cross-sectional shape of the nib (120) is substantially rectangular.

16. The interlocking solid stick of claim 12, wherein the stick comprises a low coefficient of friction (LCF) composition.

17. The interlocking solid stick of claim 12, wherein the nib (120) tapers away from the block (110) at an angle of taper.

18. The interlocking solid stick of claim 17, wherein the angle of taper is from 7.0 to 10.0 degrees.

19. The interlocking solid stick of claim 12, wherein at least one of the side edges of the block (110) is substantially curved.

20. The interlocking solid stick of claim 19, wherein all of the side edges of the block (110) are substantially curved.

21. The interlocking solid stick of claim 20, wherein at least one of the edges of the first end of the block (110) is substantially curved.

22. The interlocking solid stick of claim 21, wherein all of the edges of the first end of the block (110) are substantially curved..

**Patentansprüche**

1. Fester Verblockungsstab (100) umfassend einen Block (110) mit vier Seitenflächen, einem ersten Ende und einem gegenüberliegenden zweiten Ende, und eine Spitze (120), welche mit dem ersten Ende des Blocks (110) verbunden ist, wobei die Spitze (120) vier Seitenflächen hat, welche durch im Wesentlichen gekrümmte Seitenkanten verbunden sind, wobei das zweite Ende des Blocks (110) einen Hohlraum (130) mit im Wesentlichen gekrümmten Seitenwänden enthält, welcher dazu dimensioniert ist, eine Spitze (120) eines korrespondierenden festen Verblockungsstabs (100) passend aufzunehmen, **dadurch gekennzeichnet, dass** eine Länge (nl) einer Seitenfläche der Spitze (120) und eine Länge (l) der Seitenfläche des Blocks (100) in der gleichen Ebene ein Verhältnis nl/l zwischen 0,6 und 0,75 aufweisen.

2. Fester Verblockungsstab nach Anspruch 1, **dadurch gekennzeichnet, dass** das Verhältnis nl/l zwischen 0,67 und 0,73 liegt.

3. Fester Verblockungsstab nach Anspruch 1, **dadurch gekennzeichnet, dass** die Querschnittsform der Spitze (120) im Wesentlichen oval ist.

4. Fester Verblockungsstab nach Anspruch 1, **dadurch gekennzeichnet, dass** der Stab eine Zusammensetzung mit einem niedrigen Reibungskoeffizienten (LCF) umfasst.

5. Fester Verblockungsstab nach Anspruch 1, **dadurch gekennzeichnet, dass** sich die Spitze (120) vom Block (110) weg mit einem Verjüngungswinkel verjüngt.

6. Fester Verblockungsstab nach Anspruch 5, **dadurch gekennzeichnet, dass** der Verjüngungswinkel zwischen 7,0 und 10,0 Grad beträgt.

7. Fester Verblockungsstab nach Anspruch 1, **dadurch gekennzeichnet, dass** mindestens eine der Seitenkanten des Blocks (110) im Wesentlichen gekrümmt ist.

8. Fester Verblockungsstab nach Anspruch 7, **dadurch gekennzeichnet, dass** alle der Seitenkanten des Blocks (110) im Wesentlichen gekrümmt sind.

9. Fester Verblockungsstab nach Anspruch 8, **dadurch gekennzeichnet, dass** mindestens eine der Kanten des ersten Endes des Blocks (110) im Wesentlichen gekrümmt ist.

10. Fester Verblockungsstab nach Anspruch 9, **dadurch gekennzeichnet, dass** alle der Kanten des ersten Endes des Blocks (110) im Wesentlichen gekrümmt sind.

11. Fester Verblockungsstab nach Anspruch 1, **dadurch gekennzeichnet, dass** die Spitze (120) ein abgeflachter Kegelstumpf ist.

12. Fester Verblockungsstab (100) umfassend einen Block (110) mit vier Seitenflächen, einem ersten Ende und einem gegenüberliegenden zweiten Ende, und eine Spitze (120), welche mit dem ersten Ende des Blocks (110) verbunden ist, wobei die Spitze (120) vier Seitenflächen hat, welche durch im Wesentlichen gerade Seitenkanten verbunden sind, wobei das zweite Ende des Blocks (110) einen Hohlraum (130) mit im Wesentlichen geraden Seitenwänden enthält, welcher dazu dimensioniert ist, eine Spitze (120) eines korrespondierenden festen Verblockungsstabs (100) passend aufzunehmen, **dadurch gekennzeichnet, dass** eine Länge (nl) einer Seitenfläche der Spitze (120) und eine Länge (l) der Seitenfläche des Blocks (100) in der gleichen Ebene ein Verhältnis nl/l zwischen 0,75 und 0,95 aufweisen.

13. Fester Verblockungsstab nach Anspruch 12, **dadurch gekennzeichnet, dass** das Verhältnis nl/l zwischen 0,8 und 0,9 liegt.

14. Fester Verblockungsstab nach Anspruch 12, **dadurch gekennzeichnet, dass** das Verhältnis nl/l zwischen 0,82 und 0,87 liegt.

15. Fester Verblockungsstab nach Anspruch 12, **dadurch gekennzeichnet, dass** die Querschnittsform der Spitze (120) im Wesentlichen rechteckig ist.

16. Fester Verblockungsstab nach Anspruch 12, **dadurch gekennzeichnet, dass** der Stab eine Zusammensetzung mit einem niedrigen Reibungskoeffizienten (LCF) umfasst.

16

17. Fester Verblockungsstab nach Anspruch 12, **dadurch gekennzeichnet, dass** sich die Spitze (120) vom Block (110) weg mit einem Verjüngungswinkel verjüngt.

18. Fester Verblockungsstab nach Anspruch 17, **dadurch gekennzeichnet, dass** der Verjüngungswinkel zwischen 7,0 und 10,0 Grad beträgt.

19. Fester Verblockungsstab nach Anspruch 12, **dadurch gekennzeichnet, dass** mindestens eine der Seitenkanten des Blocks (110) im Wesentlichen gekrümmt ist.

20. Fester Verblockungsstab nach Anspruch 19, **dadurch gekennzeichnet, dass** alle der Seitenkanten des Blocks (110) im Wesentlichen gekrümmt sind.

21. Fester Verblockungsstab nach Anspruch 20, **dadurch gekennzeichnet, dass** mindestens eine der Kanten des ersten Endes des Blocks (110) im Wesentlichen gekrümmt ist.

22. Fester Verblockungsstab nach Anspruch 21, **dadurch gekennzeichnet, dass** alle der Kanten des ersten Endes des Blocks (110) im Wesentlichen gekrümmt sind.


**Revendications**

1. Bâton solide emboîtable (100) comprenant un bloc (110) avec quatre faces latérales, une première extrémité et une seconde extrémité opposées, et une pointe (120) jointe à la première extrémité du bloc (110), la pointe (120) possédant quatre faces latérales reliées par des bords latéraux sensiblement incurvés, dans lequel la seconde extrémité du bloc (110) contient une cavité (130) avec des parois latérales sensiblement incurvées dimensionnées pour recevoir de façon parfaitement ajustée une pointe (120) d'un bâton solide emboîtable correspondant (100), **caractérisé en ce qu'**une longueur (nl) d'une face latérale de la pointe (120) et une longueur (l) de la face latérale du bloc (110) dans le même plan possèdent un rapport nl/l de 0,6 à 0,75.

2. Bâton solide emboîtable selon la revendication 1, dans lequel le rapport nl/l est de 0,67 à 0,73.

3. Bâton solide emboîtable selon la revendication 1, dans lequel la forme de section transversale de la pointe (120) est sensiblement ovale.

4. Bâton solide emboîtable selon la revendication 1, dans lequel le bâton comprend une composition à faible coefficient de frottement (LCF).

5. Bâton solide emboîtable selon la revendication 1, dans lequel la pointe (120) s'éloigne en s'inclinant du bloc (110) à un angle d'inclinaison.

6. Bâton solide emboîtable selon la revendication 5, dans lequel l'angle d'inclinaison est de 7,0 à 10,0 degrés.

7. Bâton solide emboîtable selon la revendication 1, dans lequel au moins un des bords latéraux du bloc (110) est sensiblement incurvé.

8. Bâton solide emboîtable selon la revendication 7, dans lequel tous les bords latéraux du bloc (110) sont sensiblement incurvés.

9. Bâton solide emboîtable selon la revendication 8, dans lequel au moins un des bords de la première extrémité du bloc (110) est sensiblement incurvé.

10. Bâton solide emboîtable selon la revendication 9, dans lequel tous les bords de la première extrémité du bloc (110) sont sensiblement incurvés.

11. Bâton solide emboîtable selon la revendication 1, dans lequel la pointe (120) est un cône tronqué aplati.

12. Bâton solide emboîtable (100) comprenant un bloc (110) avec quatre faces latérales, une première extrémité et une seconde extrémité opposées, et une pointe (120) jointe à la première extrémité du bloc (110), la pointe (120) possédant quatre faces latérales reliées par des bords latéraux sensiblement droits, dans lequel la seconde extrémité du bloc (110) contient une cavité (130) avec des parois latérales sensiblement droites dimensionnées pour recevoir de façon parfaitement ajustée une pointe (120) d'un bâton solide emboîtable correspondant (100), **caractérisé en ce qu'**une longueur (nl) d'une face latérale de la pointe (120) et une longueur (l) de la face latérale du bloc (110) dans le même plan possèdent un rapport nl/l de 0,75 à 0,95.

13. Bâton solide emboîtable selon la revendication 12, dans lequel le rapport nl/l est de 0,8 à 0,9.

14. Bâton solide emboîtable selon la revendication 12, dans lequel le rapport nl/l est de 0,82 à 0,87.

15. Bâton solide emboîtable selon la revendication 12, dans lequel la forme de section transversale de la pointe (120) est sensiblement rectangulaire.

16. Bâton solide emboîtable selon la revendication 12, dans lequel le bâton comprend une composition à faible coefficient de frottement (LCF).

17. Bâton solide emboîtable selon la revendication 12, dans lequel la pointe (120) s'éloigne en s'inclinant du bloc (110) à un angle d'inclinaison.

18. Bâton solide emboîtable selon la revendication 17, dans lequel l'angle d'inclinaison est de 7,0 à 10,0 degrés.

19. Bâton solide emboîtable selon la revendication 12, dans lequel au moins un des bords latéraux du bloc (110) est sensiblement incurvé.

20. Bâton solide emboîtable selon la revendication 19, dans lequel tous les bords latéraux du bloc (110) sont sensiblement incurvés.

21. Bâton solide emboîtable selon la revendication 20, dans lequel au moins un des bords de la première extrémité du bloc (110) est sensiblement incurvé.

22. Bâton solide emboîtable selon la revendication 21, dans lequel tous les bords de la première extrémité du bloc (110) sont sensiblement incurvés.

**FIGURE 1A
(PRIOR ART)**

**FIGURE 1B
(PRIOR ART)**

FIGURE 2A

FIGURE 2B

FIGURE 2C

**FIGURE 3A**

NIB LENGTH (nL)

NIB HEIGHT (nh)

NIB ANGLE

**FIGURE 3B**

**FIGURE 4**

**FIGURE 5A**

**FIGURE 5B**

**FIGURE 6A**

**FIGURE 6B**

FIGURE 7A

FIGURE 7B

FIGURE 8A

FIGURE 8B

$$t1 = t2$$
Model A

**FIGURE 9A**

$$t1/t2 = l/w$$
Model B

**FIGURE 9B**

$$t1/t2 = l/w$$
Model C

**FIGURE 9C**

**FIGURE 10A**

**FIGURE 10B**

**FIGURE 10C**

**FIGURE 11**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6136757 A
- US 20040179887 A
- US 4811818 A
- US 5054582 A
- US 5251724 A
- US 5337860 A
- US 20030101897 A

**Non-patent literature cited in the description**

- **H. HARRISON ; T. MCCANNEY ; J. COTTER.** Recent Developments in COF Measurements at the Rail/Wheel Interface. *Proceedings The 5th International Conference on Contact Mechanics and Wear of Rail/Wheel Systems CM 2000 (SEIKEN Symposium No. 27,* 2000, 30-34